(19) Europäisches Patentamt

European Patent Office

Office européen des brevets

(11) **EP 1 478 150 A2**

(12) **EUROPEAN PATENT APPLICATION**

(43) Date of publication:
**17.11.2004 Bulletin 2004/47**

(51) Int Cl.7: **H04L 27/26**

(21) Application number: **04250580.0**

(22) Date of filing: **04.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **16.05.2003  KR 2003031348**<br><br>(71) Applicant: **Samsung Electronics Co., Ltd.**<br>**Suwon 442-742, Gyeonggi-do (KR)** | (72) Inventors:<br>• **Hong, Dae-sik, School of Elec. Eng.,**<br>**Yonsei Univ.**<br>**Seodaemun-gu, Seoul (KR)**<br>• **Choi, Young-ho**<br>**Paldal-gu, Suwon-city, Gyunggi-do (KR)**<br><br>(74) Representative: **Geary, Stuart Lloyd et al**<br>**Venner Shipley LLP**<br>**20 Little Britain**<br>**London EC1A 7DH (GB)** |

(54) **Symbol timing recovery for multicarrier reception**

(57)  Disclosed is a robust timing synchronization recovering device in frequency selective time-varying channels and a method for recovering timing synchronization of the same. The apparatus for recovering timing synchronization includes a multipath estimation unit for estimating multipaths with respect to received signals in a frequency domain; a multipath selection unit for selecting a most robust signal of the estimated multipaths and estimating a path delay value of the most robust signal; and a DLL (Delayed Locked Loop) unit for detecting and feedbacking a symbol timing offset based on the path delay value of the most robust signal. The timing synchronization recovering device further includes a phase compensation unit for compensating sampling timing based on a fractional symbol timing offset of the detected symbol timing offset; and a window adjusting unit for FFT (Fast Fourier transform) based on an integer symbol timing offset of the detected symbol timing offsets. Accordingly, it is possible to adaptably detect a symbol timing offset by setting a most robust signal of the multipaths to be a reference signal of the DLL, even though a signal of the multipaths suffers from deep fading for a long period.

FIG. 1

**Description**

The present invention relates to a radio signal receiving apparatus for receiving OFDM transmissions employing scattered pilots, the apparatus including a delay-locked loop for symbol timing tracking.

Generally, European countries have adopted DVB-T, which uses OFDM (Orthogonal Frequency Division Multiplexing), for digital television broadcasting. In the DVB-T system, receivers are required to synchronize with transmitters for reliable communication. The synchronization includes frequency synchronization and timing synchronization.

Timing synchronization is divided into symbol synchronization and sampling clock synchronization.

The symbol synchronization process searches for the boundary of a guard interval and an effective interval for performing a Fast Fourier transform with respect to the effective signals of OFDM symbols. The sampling clock synchronization process synchronises the sampling clock phase and frequency of a receiver with those of the transmitter.

If symbol synchronization for a sampling clock phase offset is performed in a guard interval in an OFDM communication system, there is no ISI (inter symbol interference) caused. Thus, the sampling clock offset can be compensated for in an equalization unit with ease. However, because the sampling clock frequency offset causes a symbol timing drift, continuous estimation and compensation of the symbol timing offset is required.

In the case where the symbol timing and offset estimation and compensation processes are not performed accurately, symbol timing jitter occurs. The symbol timing jitter causes performance degradation of the channel estimation algorithm, which uses a general interpolation and a residual carrier frequency offset tracking algorithm using two OFDM symbols.

In order to minimize symbol timing jitter, timing synchronization is recovered using DLL (Delay-Locked Loop) in the frequency domain based on the first incoming signal using the Baoguo Yang algorithm (Baoguo Yang, Khaled Ben Letaief, Roger S. Cheng and Zhigang Cao, "Timing Recovery for OFDM Transmission", IEEE Journal on Selected Areas in Comm., vol. 18, No. 2000).

However, if the first incoming signal in frequency selective time-varying channels is very feeble, it is difficult to predict the timing path delay value of the signal. In the case of a timing path delay value of the first incoming not been predictable, the DLL is operated using the second incoming signal, thereby causing ISI due to the pre-echo of the next symbol.

In addition, in the case that the reference signal of a selected DLL suffers from deep fading for a long period, it is impossible to track the reference signal, thereby harming timing synchronization.

A radio signal receiving apparatus, according to the present invention, is characterised by signal selection means for selecting the most robust version of a signal from a plurality of versions of the signal having different propagations delays and means for generating a reference signal for the delay-locked loop on the basis of the output of the signal selection means. Thus, symbol timing tracking makes use of the optimum received version of the transmitted signal.

Preferably, the delay-locked loop includes a phase compensation unit for adjusting the phase of an input signal.

Preferably, the signal selection means comprises means for estimating the path delay of the most robust version of the signal and said output of the signal selection means comprises the estimated path delay.

Preferably the reference signal generating means is configured to generate early and late pilot reference signals having phases advanced and retarded respectively with respect to the pilot signal positions in the received signal commensurate with said path delay.

Preferably, the delay-locked loop comprises first and second correlators for correlating the output of the phase compensation unit with respectively the early and late pilot reference signals, first and second multiplier means for respectively squaring the outputs of the first and second correlators and a subtractor for subtracting the output of the first multiplier means from the output of the second multiplier means to produce the delay-locked loop's error signal.

Preferably, the delay-locked loop includes means for dividing the error signal into a fractional part and an integer part, the fractional part being applied to the phase compensation unit as a control signal.

A fast fourier transformer means is preferably included for transforming received time domain signals into frequency domain signals, the fast fourier transformer means being responsive to said integer part of the error signal for adjusting the position of its window.

A low-pass filter is preferably included for filtering said error signal before it is applied to the means for dividing the error signal.

Other preferred and optional features are set forth in claims 10 to 29 appended hereto.

An embodiment of the present invention will now be described, by way of example, with reference to the accompanying drawings, in which:-

Figure 1 is a schematic block diagram of a receiver having an apparatus for recovering timing synchronization according to the present invention;

Figure 2 is a view illustrating an FFT window set in an acquisition mode by the apparatus for recovering timing synchronization according to the present invention;

Figure 3 is a flowchart illustrating a method for recovering timing synchronization according to the present invention; and

Figure 4 is a graph illustrating the capabilities of the apparatus for recovering timing synchronization according to the present invention.

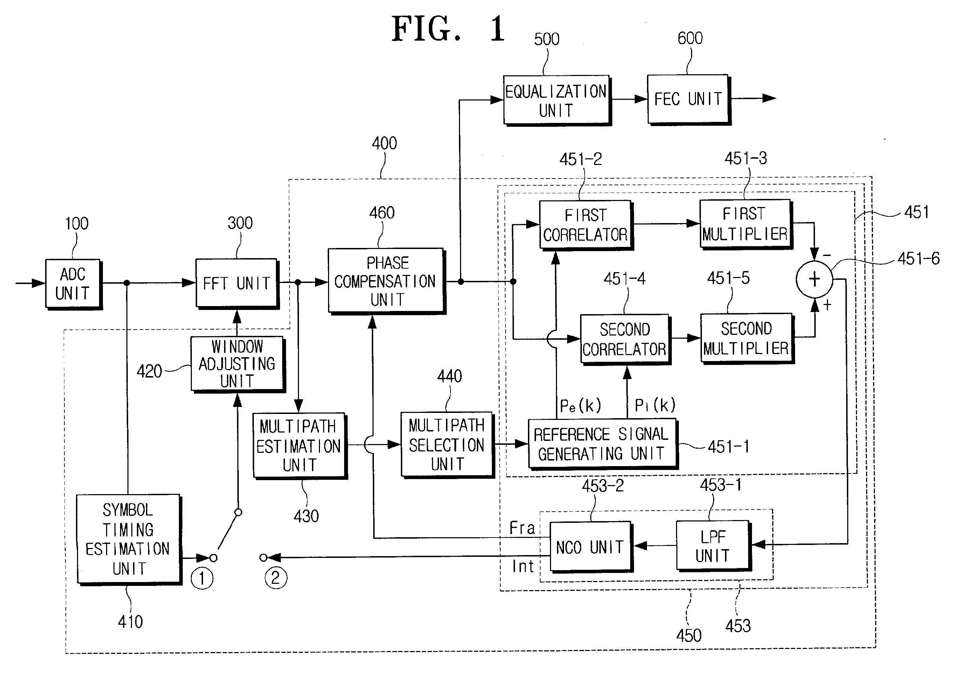

Referring to Figure 1, a DVB-T communication system has a symbol timing recovering device according to the present invention. The DVB-T communication system includes an ADC (Analogue-to-Digital Converter) unit 100, a symbol timing recovering device 400, an FFT (Fast Fourier transform) unit 300, an equalization unit 500 and an FEC (forward error corrector) unit 600.

The ADC unit 100 converts received analogue OFDM signals into digital signals by sampling, quantization and coding.

The timing synchronization recovering device 400 adjusts an FFT window starting point so as to perform Fast Fourier transformation with respect to sampling offsets occurred in the sampling process of OFDM signals in the ADC unit 100 and the effective signals of the OFDM signals.

The FFT unit 300 performs a Fast Fourier transformation of OFDM signals based on the window starting point, adjusted in response by the symbol timing recovering device 400.

The equalization unit 500 compensates the Fast Fourier transformed OFDM signals from the FFT unit 300 for distortion occurring in the transmission channels.

The FEC unit 600 detects errors in the data carried by the OFDM signals using an error detection method and corrects the detected errors.

The present invention will now be described more fully with respect to the timing synchronization recovering device 400.

The timing synchronization recovering device 400 includes a symbol timing estimation unit 410, a window adjusting unit 420, a multipath estimation unit 430, a multipath selection unit 440, a DLL (Delayed Locked Loop) unit 450 and a phase compensation unit 460. The symbol timing recovering process includes an acquisition mode □ and a tracking mode □.

The symbol timing estimation unit 410 estimates the symbol timing with respect to a received OFDM signal, when the operation mode of the timing synchronization recovering device 400 is acquisition mode □. The received OFDM signal has a guard interval, which is occupied by a copy of the end of the symbol, to prevent ISI. Therefore, the boundary of the guard interval and the effective interval is schematically set.

An FFT window starting point ($\theta_{FFT}$) at the boundary of the guard interval and the effective interval is represented by the following mathematical formula 1:

[Formula 1]

$$\theta_{FFT} = \arg\ \max_{\theta} \left[ \left| \sum_{k=\theta}^{\theta+L-1} r(k)r*(k+N) \right| - \frac{1}{2} \sum_{k=\theta}^{\theta+L-1} |r(k)|^2 + |r(k+N)|^2 \right] + L - \mu$$

where r(k) is a k$^{th}$ OFDM sample, which is received, in the time domain, N is the size of the FFT, L is the length of a guard interval, * indicates the conjugate and μ is the length of a sample obtained in a simulation, preferably 20 samples.

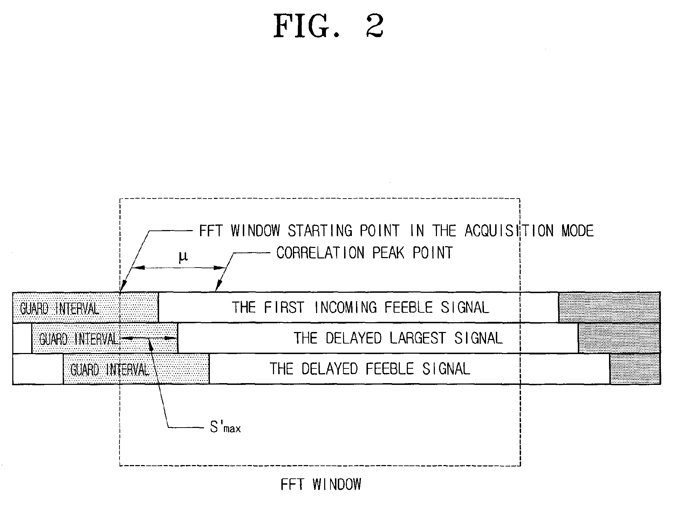

Figure 2 is an exemplary view of the FFT window set in an acquisition mode with respect to a multipath channel that has three paths.

The correlation peak point at the start point of the guard interval, which is the start point of a symbol, is delayed by different amounts and the position of the correlation peak point plus the length of a guard interval L is delayed from the boundary between the guard interval and the effective interval by different amounts as shown in Figure 2. The FFT window in the acquisition mode is set by deducting the extra sample length μ. The symbol timing offset with respect to the extra sample length μ can be compensated in the equalization unit 500.

The window adjusting unit 420 adjusts the FFT window for performing Fast Fourier transformation in the FFT window extending from the start point which is set in the symbol timing estimation unit 410 .

If the operation mode of the timing synchronization recovering device 400 is tracking mode □, the multipath estimation unit 430 estimates the transfer functions of the paths using the Fast Fourier transformed OFDM signals from the FFT unit 300. In other words, after a scattered pilot, included in the transmitted OFDM signals, is selected from the Fast Fourier transformed OFDM signals, the frequency response function ($H'_{n,k}$) of a sub-carrier, containing a pilot, is defined by Least Squares estimation according to the following mathematical formula 2:

$$[\text{Formula 2}] \quad H'_{n,k} = \frac{P'_{n,k}}{P_k}, k \in P_s$$

where $P'_{n,k}$ is the scattered pilot in the $k^{th}$ sub-carrier of the $n^{th}$ symbol in the frequency domain and $P_k$ is a scattered pilot that is already known by the receiver. $P_s$ is the index where a scattered pilot is located.

For example, a channel impulse response function ($h''_{n,i}$) is estimated by inserting M 0 in the time domain for obtaining a channel impulse response function with 1/2 the period of an OFDM sample in the time domain and performing a 2M point IFFT (Inverse Fast Fourier transform). The estimated channel impulse response function is represented by the following mathematical formula 3:

$$[\text{Formula 3}]$$

$$h''_{n,i} = \frac{1}{2M} \sum_{kk=0}^{2M-1} H''_{n,kk} \, e^{j\frac{2\pi(k\min_p + kk\Delta/2)i}{N}}$$

where $\Delta$ is the period of an adjacent scattered pilot, $H''_{n,k}$ is the frequency response function of a sub-carrier where a scattered pilot is loaded after 0 in the number of M are inserted into $H'_{n,kk}$. M represents the number of scattered pilots in one symbol, $k_{min\_P}$ represents the location of the first sub-carrier of a scattered pilot in one symbol.

The multipath selection unit 440 selects the most robust signal according to the path estimates determined by multipath estimation unit 430 and estimates the path delay. In other words, a value ($S'_{max}$) for the path delay of the most robust signal is represented by the following mathematical formula 4:

$$[\text{Formula 4}]$$

$$S_{max} = -\frac{1}{2}\arg\ \max_i \left| h''_{n,i} \right|$$

The DLL unit 450 includes an offset detection unit 451 for detecting the symbol timing offset of the OFDM signal output by the the Fast Fourier transform unit 300 using the path delay value ($S'_{max}$) of the most robust signal, selected by the multipath selection unit 440, and a feedback unit 453 for feeding back the detected symbol timing offset.

The offset detection unit 451 includes a reference signal generating unit 451-1, a first correlator 451-2, a first multiplier 451-3, a second correlator 451-4, a second multiplier 451-5 and an adder 451-6.

The reference signal generating unit 451-1 generates reference signals comprising an early pilot ($P_e(k)$) and a late pilot ($P_1(k)$) using the path delay value ($S'_{max}$) of the most robust signal, selected in the multipath selection unit 440, as shown in the following mathematical formulae 5:

$$[\text{Formula 5}]$$

$$P_e(k) = P_k e^{j\frac{2\pi(S'_{max}+\xi)}{N}}, \, k \in P_s$$

$$P_l(k) = P_k e^{j\frac{2\pi(S'_{max}+\xi)}{N}}, \, k \in P_s$$

where $\xi$ is an early phase or a late phase of the reference signals which is already known by a receiver, and its value is set to be 0.5

A first correlation result from the correlation of a scattered pilot of the Fast Fourier transformed OFDM signal, output from a phase compensation unit 460, and the early pilot ($P_e(k)$) by the first correlator 451-2 is squared by the first multiplier 451-3.

A second correlation result from the correlation of a scattered pilot of the Fast Fourier transformed OFDM signal, output from a phase compensation unit 460, and the late pilot ($P_e$(k)) by the second correlator 451-4 is squared by the second multiplier 451-5.

The adder 451-6 adds the squares of the correlation results to detects the symbol timing offset. In other words, by obtaining the difference between the squares of the correlation results. The symbol timing offset a(n, S'$_{max}$) is represented by the following mathematical formula 6:

[Formula 6]

$$a(n, S'_{max}) = E[a(n,\ S'_{max})] + n_a(n)$$

where E[a(n,S'$_{max}$)] is the effective component, $n_a$(n) is the loop noise component whose average is 0. The effective component is represented by the following mathematical formula 7:

[Formula 7]

$$E[a(n,S'_{max})] = M^2 A^2 S(S'_{max},\ \zeta)$$

where A is the power of a scattered pilot and $S(S'_{max}\ \zeta)$ has a formalized S-curve. In other words, $S(S'_{max},\ \zeta)$ is represented by the following mathematical formula 8:

[Formula 8]

$$S(S'_{max},\zeta) = \left[\frac{\sin(\frac{\pi M \Delta(S'_{max}-\zeta)}{N})}{M\sin(\frac{\pi\Delta(S'_{max}-\zeta)}{N})}\right]^2 - \left[\frac{\sin(\frac{\pi M \Delta(S'_{max}+\zeta)}{N})}{M\sin(\frac{\pi\Delta(S'_{max}+\zeta)}{N})}\right]^2$$

The feedback unit 453 includes a LPF (Low Pass Filter) unit 453-1 and an NCO (Numerically Controlled Oscillator) unit 453-2. The LPF unit 453-1 filters the symbol timing offset a(n, S'$_{max}$), the NCO unit 453-2 divides the filtered symbol timing offset a(n, S'$_{max}$) into a fractional timing offset (Fra.) and a integer symbol timing offset (Int.) and feeds them to the phase compensation unit 460 and the window adjusting unit 420 respectively.

In other words, the phase compensation unit 460 compensates for sampling clock frequency offset on the basis of the fractional symbol timing offset (Fra.), and the window adjusting unit 420 adjusts the start point of the FFT window on the basis off the integer symbol timing offset (Int.).

Therefore, it is possible to recover timing synchronization by preventing drift of the start point of the FFT window set in the acquisition mode, as shown in Figure 2.

The method for recovering timing synchronization will be described in detail.

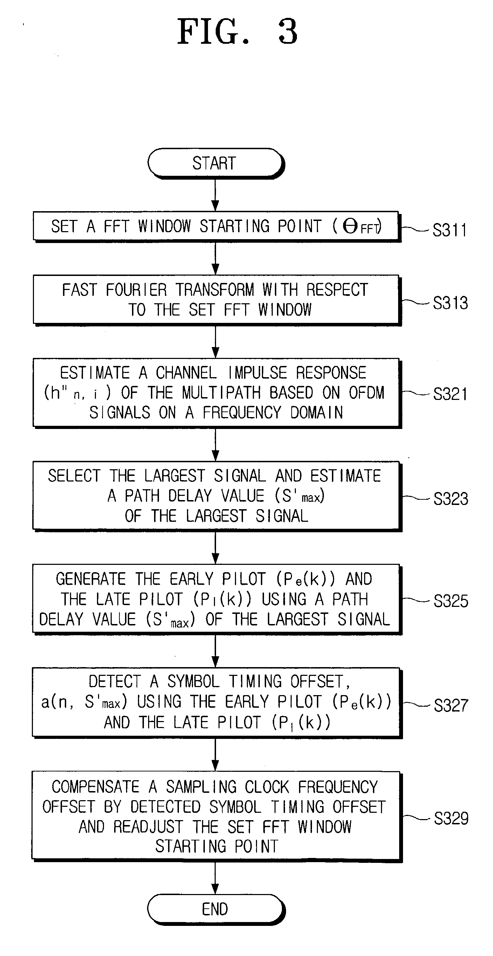

Referring to Figure 3, the received OFDM signal is transformed into a digital signal by sampling, quantization and coding in the ADC unit 100. The digital OFDM signal is input into the timing synchronization recovery apparatus 400.

First, the timing synchronization recovering device 400 is operated in the acquisition mode □ In other words, the symbol timing estimation unit 410 sets the FFT window start point ($\theta_{FFT}$) with respect to the received OFDM signal as shown in Figure 2 (S311). That is, the FFT window is set by adding the guard interval length L to the correlation peak point and deducting the extra sample length μ. The window adjusting unit 420 adjusts the position of the FFT window start point.

The FFT unit 300 Fast Fourier transforms the OFDM signal within the FFT window set in the acquisition mode (S313).

Then, the timing synchronization recovering device 400 is operated in the tracking mode □

The multipath estimation unit 430 estimates the channel impulse response function (h"$_{n,i}$) for each path using the frequency domain OFDM signals from the FFT unit (S321).

The multipath selection unit 440 selects the most robust signal according to the path estimates calculated by the multipath estimation unit 430 and estimates the path delay value (S'$_{max}$) of the most robust signal from the corresponding channel impulse response function (h"$_{n,i}$) (S323). Therefore, in the case that the selected most robust signal is in deep fading, it is possible to prevent the conventional failures to track reference signals by selecting a new most robust signal as the reference signal.

The DLL unit 450 detects the symbol timing offset, using the path delay value ($S'_{max}$) of the most robust signal as selected, and recovers timing synchronization by feeding back the detected symbol timing offset. More particularly, first, the reference signal generating unit 451-1 generates reference signals, comprising the early pilot ($P_e(k)$) and the late pilot ($P_l(k)$), using the path delay value ($S'_{max}$) of the most robust signal (S325).

The correlation result obtained using the early pilot ($P_e(k)$) and the Fast Fourier transformed OFDM signal by the first correlator 451-2 is squared by the first multiplier 451-3.

The correlation result obtained using the late pilot ($P_1(k)$) and the Fast Fourier transformed OFDM signal by the second correlator 451-4 is squared by the second multiplier 451-5.

The adder 451-6 detects the symbol timing offset $a(n, S'_{max})$ by adding the squares calculated by the first and the second multipliers 451-3, 451-5 (S327).

The detected symbol timing offset, $a(n, S'_{max})$ is filtered by the LPF unit 453-1 and divided into a fractional symbol timing offset (Fra.) and an integer symbol timing offset (Int.) by the NCO unit 453-2. The fractional symbol timing offset (Fra.) and the integer symbol timing offset (Int.) are fed to the phase compensation unit 460 and the window adjusting unit 420 respectively.

Therefore, the phase compensation unit 460 compensates for the sampling clock frequency offset based on the fractional symbol timing offset (Fra.), and the window adjusting unit 420 readjusts the FFT window start point based on the integer symbol timing offset (Int.), thereby recovering timing synchronization (S329).

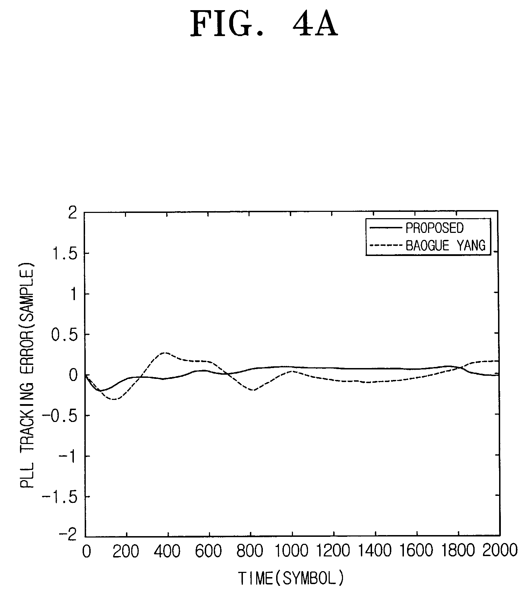

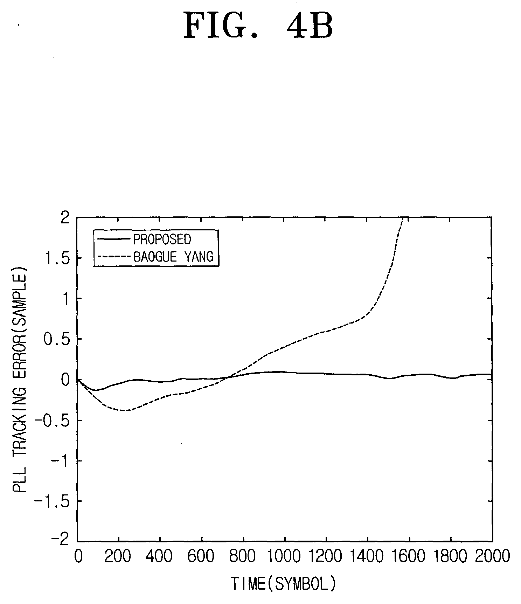

Figures 4A and 4B are graphs comparing capabilities of the timing synchronization recovering device 400 according to the present invention and a timing synchronization recovering device using the conventional Baoguo Yang algorithm. For these examples, the channel power delay profile uses a urban area model, COST207, and its signal to noise ratio (SNR) is determined to be 10dB.

Figure 4A is a graph illustrating DLL tracking error in a normal state with respect to a symbol timing offset when the Doppler frequency is 10Hz. As shown in Figure 4A, the DLL tracking error in the normal state with respect to the symbol timing offset, according to the present invention, is an extremely small and smooth curve.

Figure 4B illustrates that the timing synchronization recovering device according to the present invention rarely exhibits tracking errors, if the first incoming path signal is deeply faded for a long period under the condition that the Doppler frequency is 5Hz, contrary to the conventional timing synchronization recovering device which exhibits tracking errors a lot due to the failure to track reference signals.

It is possible to adaptably detect a symbol timing offset by setting the most robust signal of the multiple paths as a reference signal of a DDL, even though one of the paths suffers from deep fading for a long period. In addition, it is possible to prevent ISI due to pre-echo signals by setting a FFT window starting point with some margin in the guard interval.

According to the present invention, the DDL tracking error in a normal state of the symbol timing offset can be minimized by adaptably setting a reference signal for detecting a symbol timing offset as the most robust signal from among multiple paths.

It is possible to prevent interference by a neighboring symbol by adjusting the FFT window start point with some margin in the guard interval.

The DLL S-curve of the most robust signal is slightly distorted comparing to the DDL S-curve of a weaker signal by setting the most robust signal as the reference signal, thus it becomes easier to track paths and there is less error in the tracking of symbol timing offset.

**Claims**

1. A radio signal receiving apparatus for receiving OFDM transmissions employing scattered pilots, the apparatus including a delay-locked loop (450, 460) for symbol timing tracking and being **characterised by** signal selection means (430, 440) for selecting the most robust version of a signal from a plurality of versions of the signal having different propagations delays and means (451-1) for generating a reference signal for the delay-locked loop (450, 460) on the basis of the output of the signal selection means (430, 440).

2. An apparatus according to claim 1, wherein the delay-locked loop (450, 460) includes a phase compensation unit (460) for adjusting the phase of an input signal.

3. An apparatus according to claim 2, wherein the signal selection means (430, 440) comprises means (430) for estimating the path delay of the most robust version of the signal and said output of the signal selection means comprises the estimated path delay.

4. An apparatus according to claim 3, wherein the reference signal generating means (451-1) is configured to generate early and late pilot reference signals (Pe(k), Pl(k)) having phases advanced and retarded respectively with respect to the pilot signal positions in the received signal commensurate with said path delay.

5. An apparatus according to claim 4, wherein the delay-locked loop (450, 460) comprises first and second correlators (451-2, 451-4) for correlating the output of the phase compensation unit (460) with respectively the early and late pilot reference signals (Pe(k), Pl(k)), first and second multiplier means (451-3, 451-5) for respectively squaring the outputs of the first and second correlators (451-2, 451-4) and a subtractor (451-6) for subtracting the output of the first multiplier means (451-3) from the output of the second multiplier means (451-5) to produce the delay-locked loop's error signal.

6. An apparatus according to claim 5, wherein the delay-locked loop (450, 460) includes means (453-2) for dividing the error signal into a fractional part (Fra) and an integer part (int), the fractional part (Fra) being applied to the phase compensation unit (460) as a control signal.

7. An apparatus according to claim 6, including a fast fourier transformer means (300, 420) for transforming received time domain signals into frequency domain signals, the fast fourier transformer means (300, 420) being responsive to said integer part (Int) of the error signal for adjusting the position of its window.

8. An apparatus according to claim 5 or 6, including a low-pass filter (453-1) for filtering said error signal before it is applied to the means (453-2) for dividing the error signal.

9. A DVB-T receiving apparatus according to any preceding claim.

10. An apparatus for recovering timing synchronization comprising:

   a multipath estimation unit for estimating multipaths with respect to received signals in a frequency domain;
   a multipath selection unit for selecting a most robust signal of the estimated multipaths and estimating a path delay value of the most robust signal; and
   a DLL (Delayed Locked Loop) unit for detecting and feedbacking a symbol timing offset based on the path delay value of the most robust signal.

11. The apparatus for recovering timing synchronization of claim 10, wherein the apparatus further comprises:

   a phase compensation unit for compensating sampling timing based on a fractional symbol timing offset of the detected symbol timing offset; and
   a window adjusting unit for adjusting a FFT (Fast Fourier transform) window starting point based on an integer symbol timing offset of the detected symbol timing offsets.

12. The apparatus for recovering timing synchronization of claim 11, wherein the DDL unit comprises:

   an offset detecting unit for calculating the symbol timing offset based on a delay value of the most robust signal; and
   a feedback unit for dividing the calculated symbol timing offset into a fractional symbol timing offset and an integer symbol timing offset, and feedbacking the fractional symbol timing offset and the integer symbol timing offset to the phase compensation unit and the window adjusting unit, respectively.

13. The apparatus for recovering timing synchronization of claim 12, wherein the offset detection unit comprises:

   a reference signal generating unit for generating an Early pilot and a Late pilot using the path delay value of the most robust signal;
   a first correlator and a first multiplier for obtaining a correlation value of the Early pilot and a scattered pilot of the received signal which is Fast Fourier transformed, and squaring the correlation value;
   a second correlator and a second multiplier for obtaining a correlation value of the Late pilot and a scattered pilot of the received signal which is Fast Fourier transformed, and squaring the correlation value; and
   an adder for adding each calculated square of the correlation value.

**14.** The apparatus for recovering timing synchronization of claim 10, wherein a channel impulse response function ($h''_{n,i}$) of the multipaths estimated in the multipath estimation unit is represented by the following formula:

$$h''_{n,i} = \frac{1}{2M} \sum_{kk=0}^{2M-1} H''_{n,kk}\, e^{j\frac{2\pi(k_{\min_p}+kk\Delta/2)i}{N}}$$

where $\Delta$ is an internal of a neighboring scattered pilot, $H''_{n,k}$ is a frequency response function of a sub-carrier where a scattered pilot is loaded after 0 in the number of M are inserted into $H'_{n,kk}$, M is the number of scattered pilots in a symbol and $k_{\min\_p}$ is a location of the first sub-carrier of the scattered pilots in a symbol.

**15.** The apparatus for recovering timing synchronization of claim 14, wherein a path delay value ($S'_{max}$) of the most robust signal of the estimated multipath is represented by the following formula:

$$S'_{\max} = -\frac{1}{2}\arg\; \max_i \left|h''_{n,i}\right|$$

**16.** The apparatus for recovering timing synchronization of claim 15, wherein the Early pilot ($P_e(k)$) and the Late pilot ($P_l(k)$) generated based on the path delay value ($S'_{max}$) of the most robust signal are represented by the following formulas:

$$P_e(k) = P_k e^{j\frac{2\pi(S'\max+\xi)}{N}}, \; k \in P_s$$

$$P_l(k) = P_k e^{j\frac{2\pi(S'\max-\xi)}{N}}\; k \in P_s$$

where $\xi$ is the Early phase and Late phase of the reference pilot of the receiver, $P_k$ is a reference pilot of the receiver, and $P_s$ is an index where the reference pilot is located in a symbol.

**17.** The apparatus for recovering timing synchronization of claim 16, wherein a symbol timing offset $a(n, S'_{max})$ generated by the Early pilot ($P_e(k)$) and the Late pilot ($P_l(k)$) is represented by the following formula:

$$a(n, S'_{max}) = E[a(n, S'_{max})] + n_a(n)$$

where, $E[a(n,S'_{max})]$ is an effective component, and $n_a(n)$ is a component of a Loop noise whose average is 0.

**18.** The apparatus for recovering timing synchronization of claim 17, wherein the effective component $E[a(n,S'_{max})]$ is represented in the following formula.

$$E[a(n,S'_{max})] = M^2 A^2 S(S'_{max}, \zeta)$$

where A is a power of a scattered pilot.

**19.** The apparatus for recovering timing synchronization of claim 18, wherein the $S(S'_{max})$ is represented by the following formula:

$$S(S'_{max},\zeta) := \left[\frac{\sin(\frac{\pi M \Delta (S'_{max}-\zeta)}{N})}{M \sin(\frac{\pi \Delta (S'_{max}-\zeta)}{N})}\right]^2 - \left[\frac{\sin(\frac{\pi M \Delta (S'_{max}+\zeta)}{N})}{M \sin(\frac{\pi \Delta (S'_{max}+\zeta)}{N})}\right]^2$$

**20.** A method for recovering timing synchronization, the method comprising:

a multipath estimation step of estimating multipaths for received signals in a frequency domain which is Fast Fourier transformed;
a multipath selecting step of selecting the most robust signal of the estimated multipaths and estimating a path delay value of the most robust signal; and
a DLL (Delayed Locked Loop) step of detecting and feedbacking a symbol timing offset based on a path delay value of the most robust signal.

**21.** The method for recovering timing synchronization of claim 20, the method further comprising:

a phase-compensating step of compensating sampling timing based on a fractional symbol timing offset of the detected symbol timing offset; and
a window-adjusting step of adjusting an FFT (Fast Fourier transform) window starting point based on an integer timing offset of the detected symbol timing offsets.

**22.** The method for recovering timing synchronization of claim 20, wherein the DLL step comprises:

a symbol timing offset detecting step of calculating the symbol timing offset based on a delay value of the most robust signal; and
a step of dividing the calculated symbol timing offset into a fractional symbol timing offset and an integer symbol timing offset and feedbacking the fractional symbol timing offset and the integer symbol timing offset to the phase compensation unit and the window adjusting unit, respectively.

**23.** The method for recovering timing synchronization of claim 22, wherein the detecting step comprises:

a reference signal generating step of generating the Early pilot and the Late pilot using a path delay value of the most robust signal;
a first calculating step of obtaining a correlation value of the Early pilot and a scattered pilot of the received signal which is Fast Fourier transformed, and squaring the correlation value, respectively;
a second calculating step of obtaining a correlation value of the Late pilot and a scattered pilot of the received signal which is Fast Fourier transformed, and squaring the correlation value, respectively; and
a step of adding the calculated square.

**24.** The method for recovering timing synchronization of claim 19, wherein a channel impulse response function ($h''_{n,i}$) which is estimated in the multipath estimation step is represented by the following formula:

$$h''_{n,i} = \frac{1}{2M} \sum_{kk=0}^{2M-1} H''_{n,kk} e^{j\frac{2\pi(k_{min_p}+kk\Delta/2)i}{N}}$$

where $\Box$ is an interval of a neighboring scattered pilot, $H''_{n,k}$ is a frequency response function of a sub-carrier where a scattered pilot is loaded after 0 in the number of M are inserted into $H'_{n,kk}$, M is the number of scattered pilot in a symbol, and $k_{min\_p}$ is a location of the first sub-carrier of a scattered pilot in a symbol.

**25.** The method for recovering timing synchronization of claim 24, wherein a path delay value ($S'_{max}$) of the most robust signal of the estimated multipaths is represented by the following formula:

$$S'_{max} = -\frac{1}{2}\arg\ \max_i \left| h''_{n,i} \right|$$

26. The method for recovering timing synchronization of claim 25, wherein the Early pilot ($P_e(k)$) and the Late pilot ($P_l$ (k)) generated based on a path delay value ($S'_{max}$) of the most robust signal are represented by the following formulas:

$$P_e(k) = P_k\, e^{\, j\frac{2\pi(S'_{max}+\zeta)}{N}}, \ k \in P_s$$

$$P_l(k) = P_k\, e^{\, j\frac{2\pi(S'_{max}-\zeta)}{N}}, \ , \ k \in P_s$$

where $\zeta$ are Early and Late phases of the reference pilot of a receiver, $P_k$ is a reference pilot of a receiver, $P_s$ is an index where the reference pilot is located in a symbol.

27. The method for recovering timing synchronization of claim 26, wherein a symbol timing offset, $a(n, S'_{max})$ generated by the Early pilot ($P_e(k)$) and the Late pilot ($P_l(k)$) is represented by the following formula:

$$a(n, S'_{max}) = E[a(n, S'_{max})] + n_a(n)$$

where $E[a(n, S'_{max})]$ is an effective component and $n_a(n)$ is a component of Loop noise whose average is 0.

28. The method for recovering timing synchronization of claim 27, wherein the effective component, $E[a(n, S'_{max})]$ is represented by the following formula:

$$E[a(n, S'_{max})] = M^2 A^2 S(S'_{max}, \zeta)$$

where A is a power of a scattered pilot.

29. The method for recovering timing synchronization of claim 28, wherein the $S(S'_{max}, \zeta)$ is represented by the following formula:

$$S(S'_{max}, \zeta) = \left| \frac{\sin(\frac{\pi M\Delta(S'_{max}-\zeta)}{N})}{M\sin(\frac{\pi\Delta(S'_{max}-\zeta)}{N})} \right|^2 - \left| \frac{\sin(\frac{\pi M\Delta(S'_{max}+\zeta)}{N})}{M\sin(\frac{\pi\Delta(S'_{max}+\zeta)}{N})} \right|^2$$

# FIG. 1

EP 1 478 150 A2

# FIG. 2

FFT WINDOW STARTING POINT IN THE ACQUISITION MODE

CORRELATION PEAK POINT

$\mu$

| GUARD INTERVAL | THE FIRST INCOMING FEEBLE SIGNAL | |
| GUARD INTERVAL | THE DELAYED LARGEST SIGNAL | |
| GUARD INTERVAL | THE DELAYED FEEBLE SIGNAL | |

$S'_{max}$

FFT WINDOW

# FIG. 3

```
                    ┌──────────────┐
                    │    START     │
                    └──────┬───────┘
                           │
                           ▼
        ┌──────────────────────────────────────┐
        │ SET A FFT WINDOW STARTING POINT (Θ_FFT)│──── S311
        └──────────────────┬───────────────────┘
                           │
                           ▼
        ┌──────────────────────────────────────┐
        │  FAST FOURIER TRANSFORM WITH RESPECT  │──── S313
        │        TO THE SET FFT WINDOW          │
        └──────────────────┬───────────────────┘
                           │
                           ▼
        ┌──────────────────────────────────────┐
        │  ESTIMATE A CHANNEL IMPULSE RESPONSE  │
        │ (h"_{n,i}) OF THE MULTIPATH BASED ON OFDM│──── S321
        │     SIGNALS ON A FREQUENCY DOMAIN     │
        └──────────────────┬───────────────────┘
                           │
                           ▼
        ┌──────────────────────────────────────┐
        │  SELECT THE LARGEST SIGNAL AND ESTIMATE│
        │      A PATH DELAY VALUE (S'_{max})     │──── S323
        │        OF THE LARGEST SIGNAL          │
        └──────────────────┬───────────────────┘
                           │
                           ▼
        ┌──────────────────────────────────────┐
        │  GENERATE THE EARLY PILOT (P_e(k)) AND │
        │  THE LATE PILOT (P_l(k)) USING A PATH  │──── S325
        │ DELAY VALUE (S'_{max}) OF THE LARGEST SIGNAL│
        └──────────────────┬───────────────────┘
                           │
                           ▼
        ┌──────────────────────────────────────┐
        │      DETECT A SYMBOL TIMING OFFSET,   │
        │ a(n, S'_{max}) USING THE EARLY PILOT (P_e(k))│──── S327
        │     AND THE LATE PILOT (P_l(k))       │
        └──────────────────┬───────────────────┘
                           │
                           ▼
        ┌──────────────────────────────────────┐
        │ COMPENSATE A SAMPLING CLOCK FREQUENCY  │
        │ OFFSET BY DETECTED SYMBOL TIMING OFFSET│──── S329
        │    AND READJUST THE SET FFT WINDOW    │
        │            STARTING POINT             │
        └──────────────────┬───────────────────┘
                           │
                           ▼
                    ┌──────────────┐
                    │     END      │
                    └──────────────┘
```

# FIG. 4A

# FIG. 4B